# EUROPEAN PATENT SPECIFICATION

(11) **EP 3 519 722 B1**
(45) Date of publication and mention of the grant of the patent: **16.09.2020**
(21) Application number: 17791148.4
(22) Date of filing: 26.09.2017
(51) Int. Cl.: F16L 9/147

(54) **APPARATUS AND METHOD FOR APPLYING CABLES WITH ONE OR MORE OPTICAL FIBERS TO A PIPE FOR LAND OR SUBMARINE PIPELINES**
VORRICHTUNG UND VERFAHREN ZUR ANBRINGUNG VON KABELN MIT EINEM ODER MEHREREN OPTISCHEN FASERN AN EINEM ROHR FÜR LAND- ODER UNTERWASSERROHRLEITUNGEN
APPAREIL ET PROCÉDÉ PERMETTANT D'APPLIQUER DES CÂBLES AVEC UNE OU PLUSIEURS FIBRES OPTIQUES À UN TUYAU POUR DES PIPELINES TERRESTRES OU SOUS-MARINS

(30) Priority: 30.09.2016 IT 201600098298
(43) Date of publication of application: 07.08.2019
(73) Proprietor: SAIPEM S.p.A., 20097 San Donato Milanese (MI) (IT)
(72) Inventor: LATINI, Gilberto, 20097 San Donato Milanese (Milano) (IT); RIPARI, Daniele, 20097 San Donato Milanese (Milano) (IT)
(74) Representative: Mozzi, Matteo
(86) International application number: PCT/IB2017/055851
(87) International publication number: WO 2018/060851

(56) References cited:
- EP-A1- 0 449 795
- WO-A1-2016/085480
- FR-A1- 2 750 717
- US-A- 3 713 947
- US-A- 6 004 639

## Description

### Field of application.

The present invention relates to an apparatus and method for applying cables with one or more optical fibers to a pipe for land or submarine pipelines.

### Background art

During its working life, a pipe for land or submarine pipelines is subject to phenomena which are difficult to anticipate during the step of developing, the consequences of which may compromise the integrity of the pipe itself.

Such phenomena are, for example, landslides, earthquakes, ground subsidence due to the melting of ice, impacts against anchors, excavators, falling of heavy objects, corrosion, fatigue cracks and so on.

The economic losses due to the deterioration of the integrity of a pipe may be severe when the pipe is situated in remote sites, but may be major in the case of hydraulic leakages in deep sea or in the case of propagation of the initial damage.

In order to be able to predict and/or detect the damage to which a pipe may be subjected during its working life as quickly as possible, various pipe monitoring systems exist in the prior art, which can be classified according to the main technologies they employ.

With particular reference to optical type monitoring systems, if measurements with spatial continuity must be performed on the entire length of a pipe, distributed optical sensors are conveniently used, e.g. cables with one or more optical fibers arranged along a generating line of the pipe, parallel to the longitudinal direction of development of the pipe.

By following the linear development of the pipe also for several kilometers, such cables with one or more optical fibers can supply information about the integrity of the pipe and its deterioration in real time when crossed by an optical signal, e.g. by exploiting the dependency of the optical fiber refraction index on temperature and its deformation state, with a deviation which occurs at a characteristic wavelength (*Brillouin scattering*), to provide parameters, such as temperature and deformation, on lengths of several tens of kilometers with high spatial resolution.

In order to ensure high reliability of such a type of monitoring, the need has arisen to apply cables with one or more optical fibers to the pipe over large lengths, thus ensuring an application as long-lasting and with the less possible impact on the pipe laying activity as possible.

In order to satisfy such a need, various solutions are suggested in the prior art.

For example, a cable with one or more optical fibers may comprise a protective casing (typically a sheath), which may also have the function of adhesive for its application onto the outer surface of the pipe.

Alternatively, a cable with one or more optical fibers may comprise instead a polymeric or metallic casing inserted in turn in a hollow cylindrical protection, which also acts as a support for a successive longitudinal gluing onto the outer surface of the pipe and circumferential fixing to the pipe by means of tapes.

In both solutions, the cable with one or more optical fibers is applied to the outer surface of the pipe either manually or semi-manually, which method has been proven not to be very practical and to be onerous in terms of time and costs.

In order to increase productivity with respect to the solutions described above, automatic machines have been developed, capable of performing operations, such as cleaning the surface of the pipe, applying one or more optical fibers with controlled tensioning of the cable and gluing of the cable itself on the pipe, along the longitudinal direction of development of the pipe. EP 0 449 795 A1 discloses how an electrically conductive, detector wire is embedded in the wall of a plastic cable duct, which is subsequently laid in the ground.

WO2016085480 A1 discloses that pipeline segments can contain cables, such as communication cables (e.g., fiber optic cables) within insulation material surrounding the pipeline segments. Cables can be embedded within the insulation material, run through conduits embedded within the insulation material, placed in channels formed in the insulation material.

Despite being more efficient in terms of productivity with respect to the solutions with manual or semi-manual applications, the solutions with automatic application just described still display the drawback related to the gluing of the cable with one or more optical fibers onto the surface of the pipe which, during the working life of the pipe, is subject to environmental conditions, above all humidity, rain and so on, which may inevitably damage and make the adhesion of the cable with one or more optical fibers onto the surface of the pipe non-uniform, and thus not very stable or reliable; furthermore, the gluing could alter the features of the cable with one or more optical fibers.

### Summary of the invention.

It is the object of the present invention to provide an apparatus for applying cables with one or more optical fibers to a pipe for land or submarine pipelines, which allows to avoid the drawbacks indicated above with reference to the prior art, in particular which can ensure a homogeneous, reliable, stable and thus long-lasting application of a cable with one or more optical fibers to the pipe.

Such an object is achieved by means of an apparatus according to claim 1.

The present invention further relates to a method for applying at least one cable with one or more optical fibers to a pipe for land or submarine pipelines according to claim 12.

### Brief description of the drawings.

Further features and advantages of the apparatus and method for applying cables with one or more optical fibers to a pipe for land or submarine pipelines according to the present invention will become apparent from the following description of preferred embodiments, given by way of indicative, non-limiting examples, with reference to the accompanying drawings, in which:
- figure 1a shows a view of an example of pipe for land or submarine pipelines transversal to its longitudinal direction of development;
- figure 1b diagrammatically shows a portion of the pipe in figure 1a sectioned laterally along a plane parallel to the longitudinal direction of development of the pipe;
- figure 2 shows by means of a block chart an apparatus for applying cables with one or more optical fibers of a pipe, according to an embodiment of the invention;
- figure 3 diagrammatically shows a side portion of the apparatus in figure 2 operatively associated with a portion of a pipe sectioned laterally along a plane parallel to the longitudinal direction of development of the pipe;
- figure 4 diagrammatically shows a front view of the apparatus according to an embodiment of the present invention, operatively associated with a portion of a pipe sectioned along a plane traversal to the longitudinal direction of development of the pipe;
- figure 5 diagrammatically shows a mechanical/structural conformation of the apparatus of figure 4 operatively associated with a portion of a pipe;
- figures 6a-6d diagrammatically illustrate a portion of a pipe sectioned along a plane transversal to the longitudinal direction of development of the pipe during different steps of the method for applying at least one cable with one or more optical fibers to the pipe, according to an embodiment of the present invention, and
- figure 7 diagrammatically shows a section view transversal to its longitudinal direction of development of a cable with one or more optical fibers, according to an embodiment of the invention.

### Detailed description.

An apparatus for applying cables with one or more optical fibers to a pipe for land or submarine pipelines, hereinafter also simply apparatus, indicated as a whole by reference numeral 100, will now be described with reference to the aforesaid figures.

It is worth noting that equivalent or similar elements are indicated by the same numeral or alphanumerical references in the figures.

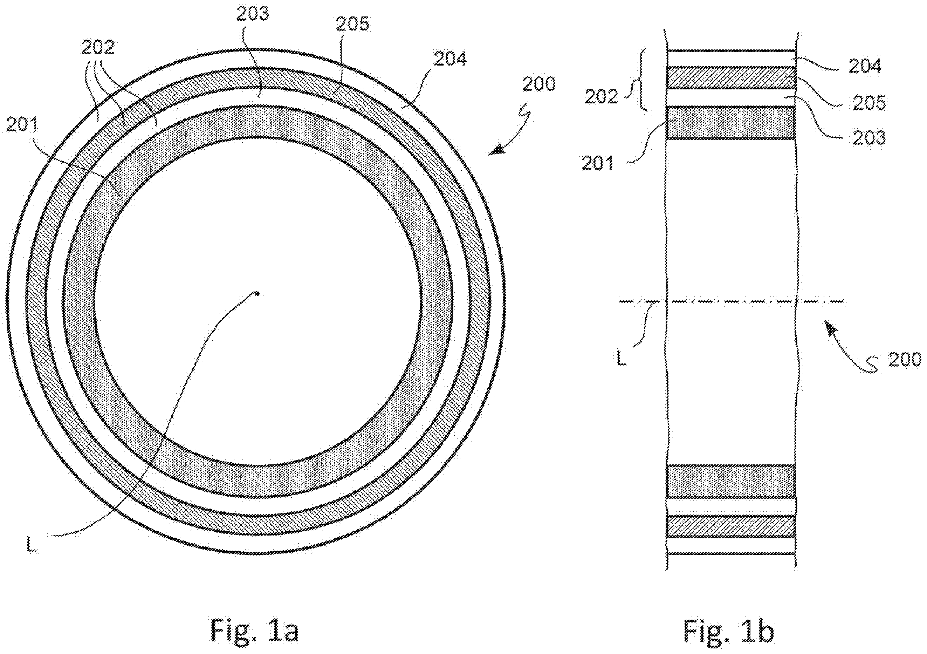

With reference to figures 1a and 1b, an example of pipe for land or submarine pipelines, hereinafter also simply pipe, is indicated as a whole with reference numeral 200.

The pipe 200, preferably with circular section, has a longitudinal direction of development L, symbolically represented by a dot in some figures (e.g. figure 1a), in which the pipe 200 is shown in section view taken along a section plane orthogonal to the longitudinal direction of development L of the pipe 200, or symbolically represented by a dashed line, where the pipe 200 is shown in lateral section taken along a plane parallel to the longitudinal direction of development L of the pipe 200 (figure 1b).

The pipe 200 comprises at least one layer of metallic material 201, e.g. steel, and at least one multilayer cladding 202 of said layer of metallic material 201.

So, in radial direction starting from the center of the pipe, the pipe 200 comprises said at least one layer of metallic material 201 and said at least one multilayer cladding 202 (see for example figures 1a, 1b, 3 and 4).

The at least one multilayer cladding 202 comprises at least a first cladding layer 203 proximal with respect to said at least one layer of metallic material 201 and at least a second cladding layer 204 distal with respect to said at least one layer of metallic material 201, opposite to said at least a first cladding layer 203.

In other words, in radial direction starting from the center of the pipe 200, said at least a first cladding layer 203 is the lower layer of said at least one multilayer cladding 202, in contact with said at least one layer of metallic material 201, while said at least a second cladding layer204 is the upper layer of said at least one multilayer cladding 202, opposite to the lower layer.

The at least a first cladding layer 203 is made of corrosion-proof material, e.g. FBE (Fusion Bonded Epoxy).

The at least a second cladding layer 204 is made of polymeric material, e.g. polyethylene, adapted to protect the at least one layer of metallic material 201 from a mechanical point of view.

According to an embodiment, shown in figures 1a and 1b, the at least one multilayer cladding 202 further comprises a third cladding layer 205 interposed between said at least a first cladding layer 203 and said at least a second cladding layer 204.

The at least a third cladding layer 205 is an adhesive material, adapted to ensure an optimal adhesion between said at least a first cladding layer 203 and said at least a second cladding layer 204.

In a further embodiment, not shown in the figures, the pipe may further comprise at least one further layer of cladding of said at least one multilayer cladding 202.

The at least one further cladding layer is for example cement, concrete, gunite, and so on.

In this embodiment, in radial direction starting from the center of the pipe, the pipe 200 comprises said at least one layer of metallic material 201, said at least one multilayer cladding 202 and said at least one further cladding layer.

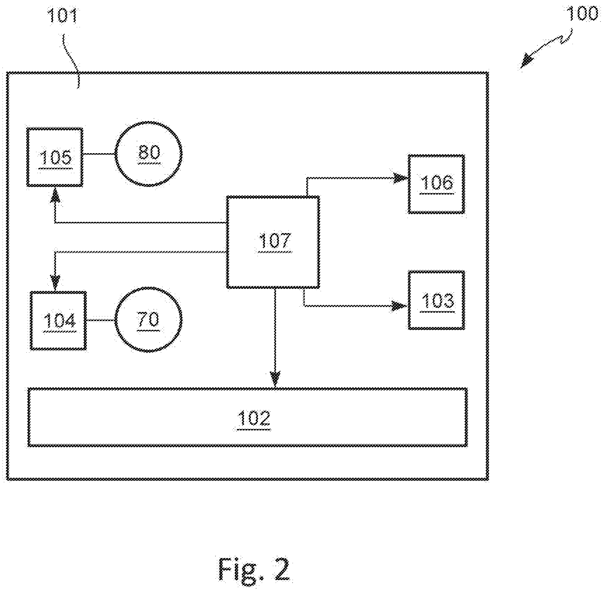

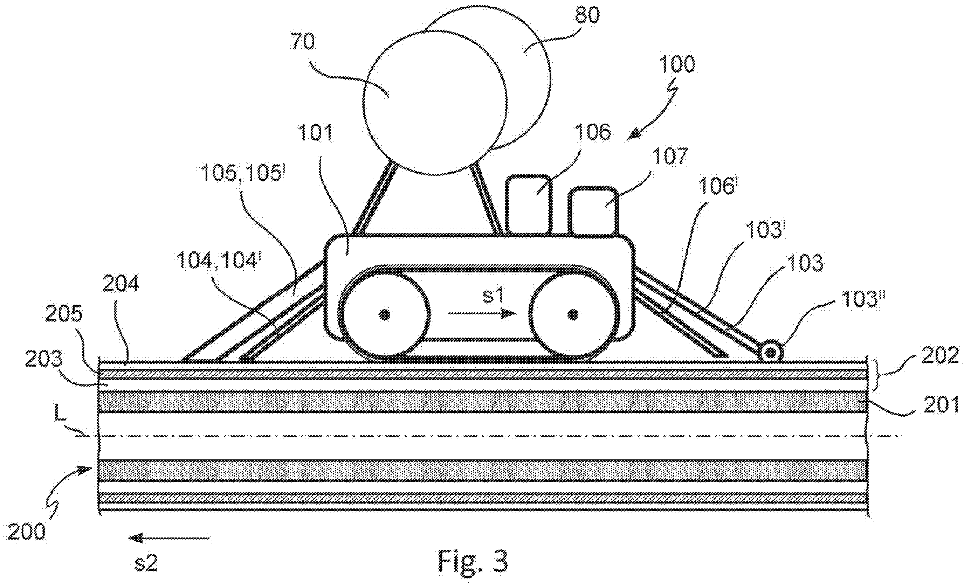

With reference now to figures 2 and 3, the apparatus 100 comprises a supporting module 101 configured to be operatively associated with the pipe 200.

In this regard, the supporting module 101 is configured to slide relatively to the pipe 200 along the longitudinal direction of development L of the pipe 200 in a first sense of advancement s1 (indicated by an arrow, e.g. from the left rightwards, in figure 3).

In an embodiment, shown in figure 3, the relative sliding between the supporting module 101 and the pipe 200 is obtained by moving the supporting module 101 and keeping the pipe 200 fixed in the first sense of advancement s1.

Such an embodiment is used, for example, when the pipe 200 is already laid on the ground.

In a further embodiment, alternative to that above, the relative sliding between the supporting module 101 and the pipe 200 is obtained by keeping the supporting module 101 fixed and moving the pipe 200 in a second sense of advancement s2, opposite to the first sense of advancement s1.

It is worth noting that the second sense of advancement s2 is indicated in figure 3 by a dashed arrow, e.g. from the right leftwards.

Such an embodiment is used, for example, when the pipe 200 is on a launching line of a ship.

In a further embodiment, alternative to those above, the relative sliding between the supporting module 101 and the pipe 200 is obtained by moving both the main supporting module 101, in the first sense of advancement s1, and the pipe 200, in the second sense of advancement s2, opposite to the first sense of advancement s1.

Turning back in general, the supporting module 101 is configured to be operatively associated with the pipe 200, either already laid (in a trench or overground) or on a launching line of a ship, so as to assume and keep a stable position during the relative sliding between the supporting module 101 and the pipe 200 along the longitudinal direction of development L of the pipe 200.

In greater detail, in an embodiment, the supporting module 101 comprises rotational elements 102, e.g. tracks or wheels, adapted to allow the supporting module 101 to slide relatively with respect to the pipe 200 along the longitudinal direction of development L of the pipe 200, by means of the interaction of the rotational elements 102 with the pipe 200.

It is worth noting that in an embodiment, not shown in the figures, the supporting module 101 is provided with a motor adapted to rotate the rotational elements 102, e.g. if the supporting module 101, and thus the apparatus 100, is moving while the pipe 200 is fixed.

According to a further embodiment, alternative to the previous one, the supporting module 101 is provided with a motor adapted to rotate the rotational elements 102, e.g. if the supporting module 101, and thus the apparatus 100, is moving while the pipe 200 is moving.

It is worth noting that the rotational elements 102 are distributed on the supporting module 101 so as to be able to ensure stability to the apparatus 100 during the relative sliding between supporting module 101 and pipe 200.

According to an embodiment, shown in the figures, the rotational elements 102 comprise a pair of tracks, each of which is associated with a respective side of the supporting module 101, at a mutual set distance.

According to a further embodiment, alternative to that above and not shown in the figures, the rotational elements 102 comprises a pair of plurality of wheels, each of which is aligned and associated with a respective side of the supporting module 101, at a set distance with respect to one another.

The set distance defined above, in both described embodiments, is such as so allow the supporting module 101 to assume and maintain a stable position on the pipe 200 during the relative sliding between the supporting module 101 and the pipe 200.

According to further embodiments, not shown in the figures, the rotational elements 102 may comprise tracks, wheels and the like, or a combination thereof.

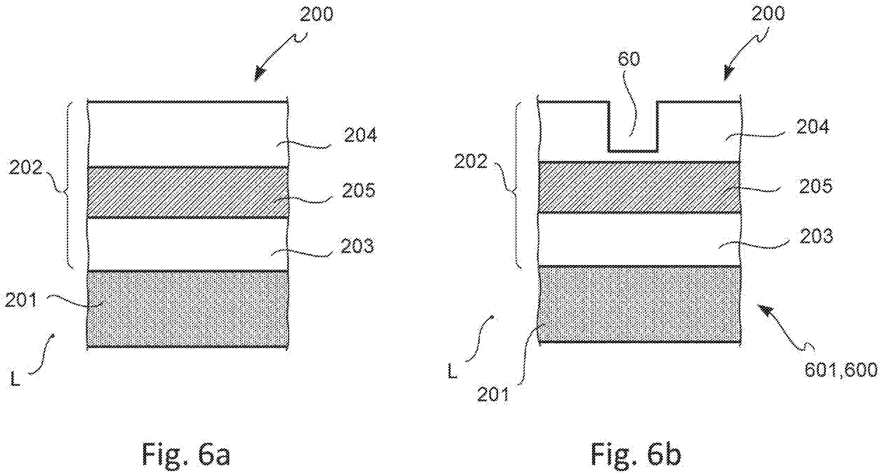

Turning back to the embodiment shown in figures 2 and 3 and making further reference to figures 6b-6d, the apparatus 100 further comprises a milling unit 103 operatively associated with the supporting module 101.

The milling unit 103 is configured to make a groove 60 in a peripheral radial portion of said at least a second cladding layer 204 along the longitudinal direction of development L of the pipe 200, during the relative sliding between the supporting module 101 and the pipe 200 (figure 6b).

In an embodiment, the groove 60 is made in the radially peripheral portion of said at least a second cladding layer 204 of said at least one multilayer cladding 202 starting from the outer surface of the pipe 200.

In an embodiment, shown in figure 3, the milling unit 103 comprises a respective robotic arm 103' having a first end kinematically associated with the supporting module 101 and a second free end, opposite to the first end, provided with a milling member 103".

Such a milling member 103" may be any tool adapted to mill, etch or cut said at least a second cladding layer 204.

Examples of milling members are circular mill end, circular disc or cutting tools more in general.

It is worth noting that the milling unit 103 is further configured to make the groove 60 having a set radial depth and a set width transversally to the longitudinal direction of development L of the pipe 200 in the radially peripheral portion of said at least a second cladding layer 204 of said at least one multilayer cladding 202.

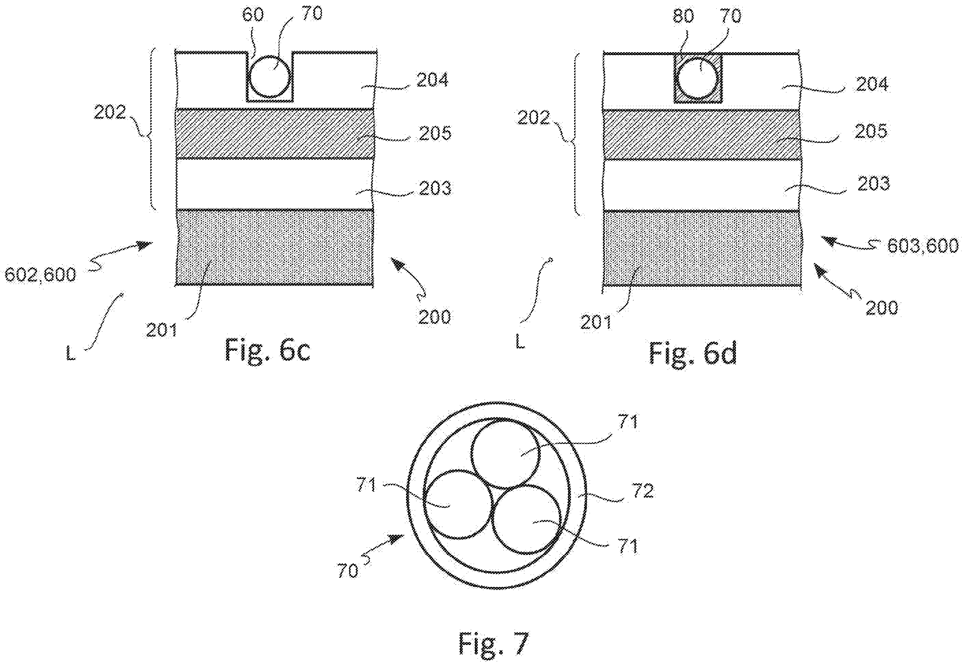

More in detail, the set radial depth of the groove 60 is smaller than the thickness of said at least a second cladding layer 204 of said at least one multilayer cladding 202 so as to ensure that the groove 60, thus implicitly at least one cable 70 of one or more optical fibers (sensor elements, shown in figures 6c and 6d) which can be housed therein, is in the radial direction entirely inside said at least a second cladding layer 204 of said at least one multilayer cladding 202.

In this regard, it is worth noting that the set radial depth of the groove 60 is shown so that the radial distance between said at least one layer of metallic material 201 and the groove 60 allows to position the at least one cable 70 of one or more optical fibers, when housed inside the groove, as close as possible to said at least one metallic material layer 201 of the pipe 200, but advantageously without damaging either said least a first cladding layer 203 (or also said at least a third cladding layer 205, if present) of said at least one multilayer cladding 202 or said at least one layer of metallic material 201, during the action of the milling unit 103.

The choice of the set radial depth of the groove 60, and thus of the radial distance between said at least one metallic material layer 201 and the groove 60, is as a function of the nominal thickness of said at least a second cladding layer 204 in which to make the groove 60.

An example of the radial distance between said at least one layer of metallic material 201 and the groove 60 is about 0.5 mm, in the case of a nominal thickness of said at least a second cladding layer 204 generally comprised between about 2.0 mm and about 4.0 mm.

Instead, the set width of the groove 60, transversally to the longitudinal direction of development L of the pipe 200, is defined so as to be able to house inside at least one cable 70 of one or more optical fibers (figures 6c and 6d), previously introduced therein, and/or possibly multiple cables of one or more optical fibers.

In greater detail, the width of the groove 60 is chosen as a function of the diameter of the single cable with one or more optical fibers and/or possibly the number of cables with one or more optical fibers to be housed inside the groove 60.

An example of set length of the groove 60 is about 2 mm.

It is worth noting that the choice of a set radial depth and of a set width of the groove 60, transversally to the longitudinal direction of development L of the pipe 200, advantageously allows to prevent the radially peripheral portion of said at least a second cladding layer 204 from oxidizing in contact with oxygen, thus compromising the successive melting process and thus obstructing the chemical process which leads to the correct melting of a molten filling material released by an extrusion unit (described below) and by the part of said at least a second cladding layer 204 in contact with the molten filling material.

According to a further embodiment, the set radial depth may be about 0.1-0.2 mm, while the set transversal width of the longitudinal direction of development L of the pipe 200 may be at most about 1 cm.

With reference now also to figure 7, the at least one cable 70 of one or more optical fibers, also hereinafter simply a cable 70, comprises a plurality of optical fibers 71 (sensor elements), in the example in the figure, three optical fibers, and a cladding sheath 72 of said plurality of optical fibers 71.

The cladding sheath 72 has the function of enveloping and protecting the plurality of optical fibers 71, in order to ensure the protection of the plurality of optical fibers 71 to prevent them from breaking following deformation and which could filter part of the deformation of the pipe 200 detecting an incorrect deformation value of the pipe.

The features of the material of the cladding sheath 72 are important for the purposes of the present invention and will be described below after having described other components and other functions of the apparatus 100.

In this regard, it is worth noting that examples of material for the cladding sheath are fiberglass or fiberglass with added carbon.

Turning back to the embodiment in figures 2 and 3, the apparatus 100 also comprises a laying unit 104 of said at least one cable 70 operatively associated with the supporting module 101.

It is worth noting that in figures 2 and 3 said at least one cable 70 is simply and diagrammatically shown as a respective reel in which said at least one cable 70 is wound.

The laying unit 104 is configured to lay said at least one cable 70 with one or more optical fibers within the groove 60, during the relative sliding between the supporting module 101 and the pipe 200 along the longitudinal direction of development L of the pipe 200.

In greater detail, the laying unit 104 comprises a respective mechanical arm 104' having a first end kinematically associated with the supporting module 101 and a second free end, opposite to the first end, having a respective opening facing towards the groove 60 (not shown in figures 2 and 3) made in the radially peripheral portion of said at least a second cladding layer 204 of said at least one multilayer cladding 202 for releasing said at least one cable 70 in the groove 60.

In particular, the laying unit 104 is configured to unwind said at least one cable 70 from the respective reel and to lay said at least one cable 70 inside the groove 60.

In an embodiment, the laying unit 104 is further configured to subject said at least one cable 70 to mechanical tensioning while laying it.

Turning back to the embodiment shown in figures 2 and 3 and also to figure 6b-6d, the apparatus 100 further comprises an extruding unit 105 operatively associated with the supporting module 101.

The extruding unit 105 is configured to release a filling material 80 of the groove 60 to embed said at least one cable 70 within said groove 60, during the relative sliding between the supporting module 101 and the pipe 200 along the longitudinal direction of development L of the pipe 200, melting the filling material 80 of the groove 60 with the radially peripheral portion of said at least a second cladding layer 204 of at least one multilayer cladding 202 in which the groove 60 is made.

The filling material 80 is simply and diagrammatically shown as a respective reel on which a respective thread of said filling material 80 is wound.

In greater detail, the extruding unit 105 comprises a respective mechanical arm 105' having a first end kinematically associated with the respective reel of thread of filling material 80 and a second free end, opposite to the first end, provided with a respective extruding head (not shown in the figures) facing towards the groove 60.

The filling material 80 is a polymeric material, e.g. polyethylene, polypropylene or polyolefin in general.

The extruding unit 105 is configured to unwind a thread of filling material 80 from a respective reel, to melt it within the extruding unit 105 at a set melting temperature, to release the molten filling material 80 within the groove 60 by means of a respective extruding head, to embed said at least one cable 70 with one or more optical fibers within the groove 60, during the relative sliding between the supporting module 101 and the pipe 200 along the longitudinal direction of development L of the pipe 200, melting at least part of said at least a second cladding layer 204 in which the groove 60 is made with the molten filling material 80.

Thereby, said at least one cable 70 in the groove 60 is then embedded both in the molten filling material 80 and in the molten part of said at least a second cladding layer 204.

In an embodiment, the extruding unit 105 is configured to subject the thread of filling material 80 to crushing inside the extruding unit 105 before subjecting it to melting in the extruding unit 105 at a set melting temperature.

The set melting temperature is adjustable and depends, for example, on the type of material used. An example of the value of such a set melting temperature is about 200°C - 230 °C.

After melting, the previously molten filling material 80 and the molten part of said at least a second cladding layer 204 cool, bonding to each other as if they were a single material in which said at least one cable 70 is embedded.

It is worth noting that the embedding of said at least one cable 70 in the groove 60 made in the radially peripheral portion of said at least a second cladding layer 204 of said at least one multilayer cladding 202 advantageously allows to obtain a better adhesion and stability over time of a cable 70 with one or more optical fibers during the working life of the pipe 200 with respect to the method of the prior art which includes gluing the cable 70 with one or more optical fibers onto the outer surface of the pipe 200.

Furthermore, this advantageously allows to obtain both better protection from the mechanical point of view, because said at least one cable 70 is housed inside said at least a second cladding layer 204 of said at least one multilayer cladding 202 of the metallic layer 201 of the pipe instead of on its outer surface, and more reliability from the mechanical point of view and in terms of the data which can be detected by the optical fibers (sensor elements) of the cable, because the cable integrated by embedding the pipe 200 cannot move with respect thereto.

Finally, it is worth noting that in an embodiment, the use of a specific cable 70 with one or more totally dielectric optical fibers advantageously allows to obtain a reduced screening effect of said at least one multilayer cladding 202 made of polymeric material and to obtain a signal range by the cable with one or more optical fibers to distances equal to 8-10 km.

Turning back to figure 7 and to the example of said at least one cable 70 described above, the material of the cladding sheath 72 of the plurality of optical fibers 71 must be resistant to the melting temperature of the filling material 80.

Indeed, if the cladding sheath 72 were not able to withstand such temperatures it would melt and after cooling would deform one or more fibers of the plurality of optical fibers 71 and deformations which do not actually concern the pipe 200 could be detected and signaled.

So, the material of the cladding sheath 72 must have melting temperature higher than about 220°-230° and a rigidity such as not to absorb part of a deformation of the pipe 200.

This allows to prevent one or more fibers of the plurality of optical fibers 71 from breaking following deformation and which could filter part of the deformation of the pipe 200 detecting an incorrect deformation value of the pipe.

In light of these considerations, it is worth noting that examples of material suited for the cladding sheath 72, for the purposes of the present invention, are fiberglass or fiberglass with added carbon.

With reference again to figure 3, it is worth noting that in the first sense of advancement s1 of the supporting module 101 during the relative sliding of the supporting module 101 with respect to the pipe 200, the milling unit 103 precedes the laying unit 104 of said at least one cable 70 of one or more optical fibers, which in turn precedes the extruding unit 105.

According to an embodiment, shown in figures 2 and 3, the apparatus 100 may further comprise a cleaning unit 106, operatively associated with the supporting module 101, the function of which depends on the relative position with respect to the extruding unit 105.

It is worth noting that in the first sense of advancement s1 of the supporting module 101 during the relative sliding of the supporting module 101 with respect to the pipe 200, the cleaning unit 106 is downstream of the milling unit 103 and upstream of the laying unit 104 of said at least one cable 70.

According to an embodiment, shown in figure 3, the cleaning unit 106 is downstream of the extrusion unit 105, in the first sense of advancement s1 of the supporting module 101 during the respective sliding of the supporting module 101 with respect to the pipe 200.

In such an embodiment, the cleaning unit 106 is configured to remove, during the relative sliding between the supporting module 101 and the pipe 200 along the longitudinal direction of development L of the pipe 200, an oxidized portion formed on said at least a second cladding layer 204 of said at least one multilayer cladding 202 as a result of the contact with air after the action of the milling unit 103.

Such a removal, by the cleaning unit 106, advantageously allows to ensure that the chemical process which occurs during the melting of the filling material 80 and of the part of said at least a second cladding layer 204 in contact with the molten filling material 80 occurs correctly and the two polymeric materials become a single material after cooling, as mentioned above.

According to an embodiment, not shown in the figures, alternatively or in combination with one above, the cleaning unit 106, in the first sense of advancement s1 of the supporting module 101 during the respective sliding of the supporting module 101 with respect to the pipe 200, is upstream of the extrusion unit 105.

In this embodiment, the cleaning unit 106 is configured to remove, during the relative sliding between the supporting module 101 and the pipe 200 along the longitudinal direction of development L of the pipe 200, material debris of said at least a second cladding layer 204 of said at least one multilayer cladding 202 that the milling unit 103, after making the groove 60, may have left on the pipe 200 and/or within the groove 60 itself.

For example, the cleaning unit 106 may be a blower capable of eliminating the detritus left by the preceding operations.

Turning back to the embodiment in figure 3, from a structural point of view, the cleaning unit 106 comprises a respective mechanical arm 106' having a respective first end kinematically associated with the supporting module 101 and a respective second free end, opposite to said first end, provided with a respective cleaning head facing towards the groove 60.

According to a further embodiment, not shown in the figures, the apparatus 100 may further comprise a tubular heating element operatively associated with the supporting module 101.

The tubular heating element is configured to heat the radially peripheral portion of said at last a second cladding layer 204 in which the groove 60 is formed in order to allow to prepare such a radial peripheral portion for the next melting with the molten filling material 80 and then restore, with the filling material 80, said at least a second cladding layer 204 with the at least one cable 70 embedded therein.

In an embodiment, the tubular heating element comprises a respective first end operatively associated with the supporting module 101 and a respective second free end, opposite to the said first end, facing towards the groove 60.

It is worth noting that the tubular heating element is configured to emit hot air at a set heating temperature.

The set heating temperature value is adjustable and depends on the set melting temperature of the thread of the filling material 80.

Examples of values of said set heating temperature may be comprised in the range of about 200°C - 235°C.

In an embodiment, using the reference of figure 3, it is worth noting that the tubular heating element may following the laying unit 104 and precede the extruding unit 105 in the first sense of advancement s1 of the supporting module 101 during the relative sliding between the supporting module 101 and the pipe 200.

With reference to the embodiment in figures 2 and 3, the apparatus 100 further comprises a control unit 107, e.g. a microcontroller or a microprocessor, operatively associated with the supporting module 101.

The control unit 107 is also operatively associated with the other components of the apparatus 100 described above (rotational elements 102, milling unit 103, laying unit 104, extruding unit 105, cleaning unit 106 - if present, tubular heating element).

The control unit 107 is configured to load and run specific program codes for controlling the apparatus 100.

In particular, the control unit 107 is configured to control the components of the apparatus 100, described above with reference to different embodiments, and operating parameters, such as the set radial depth of the groove 60, the set radial depth and the set width of the upper portion removed by the cleaning unit 106, the set melting temperature of the thread of filling material, the set heating temperature, and so on.

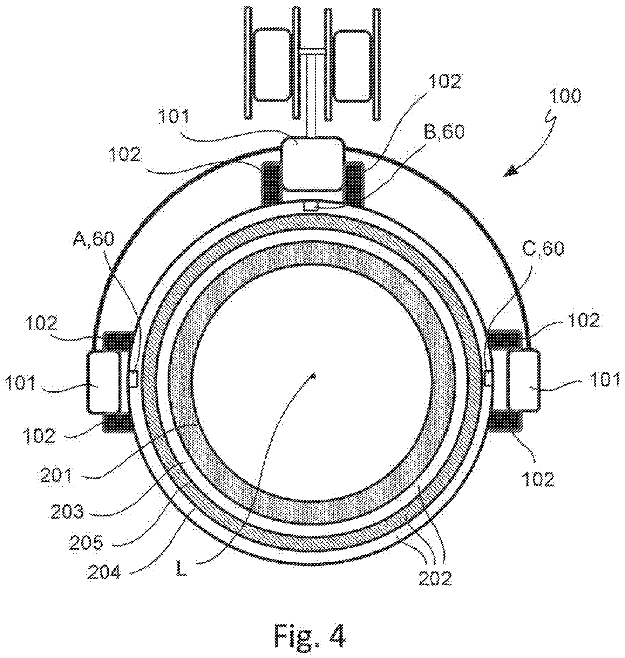

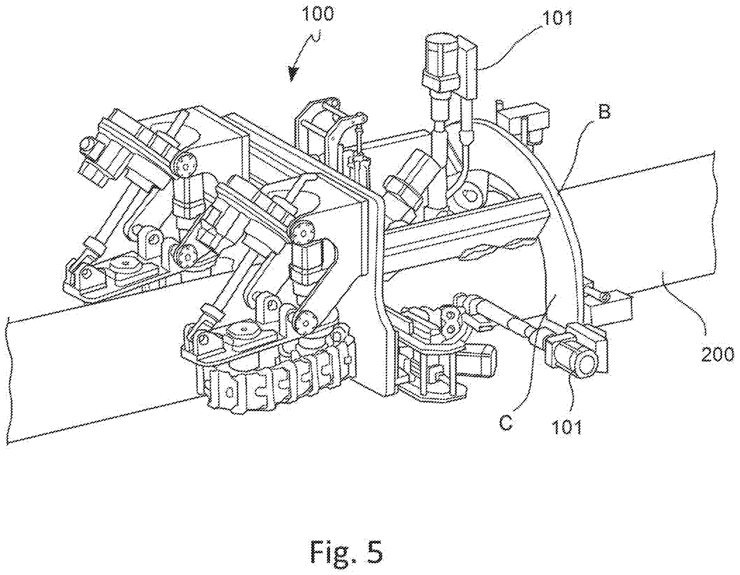

In an embodiment according to the invention, shown in figures 4 and 5, the apparatus 100 comprises a plurality of supporting modules (indicated by reference number 101 in figure 4) on each of which the components described above with reference to the supporting module 101 (not shown in figure 4) are operatively associated and replicated.

The configuration of this embodiment advantageously allows to apply multiple cables with one or more optical fibers to the pipe 200, each of which will be housed and embedded in a respective groove of a plurality of grooves made on said at least a second cladding layer 204 according to a set distribution along different radial directions with respect to the section of the tube 200 along a plane transversal to the longitudinal direction of development L of the pipe 200.

In the example in figures 4 and 5, the plurality of grooves will comprise three grooves A, B and C, two grooves (A and C) diametrically opposite and a third groove (B) at 90° on both other two grooves.

According to another embodiment, not shown in the figures, the plurality of grooves may comprise three grooves distanced with respect to one another, e.g. by 120°.

The distribution and number of grooves made on the radially peripheral portion of said at least a second cladding layer 204, and the consequent application of corresponding cables with one or more optical fibers, allow to increase the reliability of the monitoring of the pipe 200.

In another embodiment, not shown in the figures, the apparatus 100 can comprise more than one laying unit 104 of at least one cable 70 with one or more optical fibers, operatively associated with the supporting module 101, each of which is configured to lay a respective cable 70 within the groove itself, during the relative sliding between the supporting module 101 and the pipe 200 along the longitudinal direction of development of the pipe 200.

This embodiment also allows to increase the reliability of the monitoring of the pipe 200.

With reference now also to figures 6a-6d, a method will be described for applying at least one cable 70 with one or more optical fibers to a pipe 200 for land or submarine pipelines.

The pipe 200 was described above with reference to figure 1 and to a portion of its section along a section plane transversal to the longitudinal direction of development L of the pipe 200 is shown in figure 6a.

Said at least one cable 70 with one or more optical fibers was also described above (figure 7).

Such a method, indicated in figures 6a-6d by reference numeral 600, can be performed by an apparatus 100 as described above.

The method 600 comprises a step of making 601, by a milling unit 103 operatively associated with a supporting module 101 of an apparatus 100, a groove 60 along the longitudinal direction of development L of the pipe 200 in a peripheral radial portion of said second cladding layer 204 of at least one multilayer cladding 201 of the pipe 200, during the relative sliding between the supporting module 101 and the pipe 200 (figure 6b).

The resulting groove 60 has a set radial depth and a set width, transversally to the longitudinal direction of development L of the pipe 200.

Examples and advantages of the set radial depth of the groove 60 and of the set width, transversally to the longitudinal direction of development L of the pipe 200, of the groove 60, have been described above.

The method further comprises a step of laying 602, by a laying unit 104 operatively associated with the supporting module 101 of the apparatus 100, at least one cable 70 with one or more optical fibers in the groove 60, during the relative sliding between the supporting module 101 along the longitudinal direction of development L of the pipe 200 (figure 6c).

According to an embodiment, the step of laying 602 comprises a step of unwinding, by the laying unit 104, said at least one cable 70 from the respective reel by subjecting said at least one cable 70 to mechanical tensioning.

The method 600 further comprises a step of releasing 603, by an extruding unit 105 operatively associated with the supporting module 101 of the apparatus 100, a filling material 80 of the groove 60 to embed said at least one cable 70 within the groove 60, during the relative sliding between the supporting module 101 and the pipe 200, along the longitudinal direction of development L of the pipe 200, melting with the molten filling material 80 of the groove 60 the radially peripheral portion of said at least a second cladding layer 204 in which the groove 60 is made.

The step of releasing 603 comprises the step of unwinding, by the extruding unit 105, a thread of filling material 80 from the respective reel, melting it inside the extruding unit 105 at a set melting temperature, releasing the molten filling material 80 within the groove 60 by means of a respective extruding head of the extruding unit 105 to embed said at least one cable 70 with one or more optical fibers within the groove 60, during the relative sliding between the supporting module 101 and the pipe 200 along the longitudinal direction of development L of the pipe 200, melting at least part of said at least a second cladding layer 204 at the walls of the groove 60 with the molten filling material 80.

In an embodiment, the step of releasing 603 comprises a step of subjecting the thread of filling material 80 to crushing inside the extruding unit 105 before subjecting it to melting in the extruding unit 105 at a set melting temperature.

Examples of the set melting temperature of the filling material have been provided above.

It is worth noting that the embedding of said at least one cable 70 in the groove 60 is achieved in the radially peripheral portion of said at least a second cladding layer 204 and advantageously allows to obtain a better adhesion and stability over time of the cable 70 with one or more optical fibers during the working life of the pipe 200 with respect to the method of the prior art which includes gluing the cable to the outer surface of the pipe 200.

Furthermore, this advantageously allows to obtain both better protection from the mechanical point of view, because the cable 70 with one or more optical fibers is housed in said at least a second cladding layer 204 of said at least one multilayer cladding 202 of said at least one layer of metallic material 201 of the pipe 200 instead of on the outer surface, and more reliability from the mechanical point of view and more reliability in terms of the data which can be detected by the cable 70 with one or more optical fibers (sensor elements) of the cable, integrated by melting in the pipe 200 cannot move with respect thereto.

Finally, it is worth noting that in an embodiment, the use of a specific cable with one or more totally dielectric optical fibers advantageously allows to obtain a reduced screening effect of said at least one multilayer cladding 202 made of polymeric material.

According to an embodiment, not shown in the figures, the method comprises a step of removing, by a cleaning unit 106, during the relative sliding between the supporting module 101 and the pipe 200 along the longitudinal direction of development L of the pipe 200, an oxidized portion formed on said at least a second cladding layer 204 of said at least one multilayer cladding 202 as a result of the contact with air after the action of the milling unit 103.

The advantages of such a removal have been described above.

According to an embodiment, not shown in the figures, alternatively or in combination with that above, the method 600 comprises a step of removing, by the cleaning unit 106, during the relative sliding between the supporting module 101 and the pipe 200 along the longitudinal direction of development L of the pipe 200, material debris of said at least a second cladding layer 204 of said at least one multilayer cladding 202 that the milling unit 103, after making the groove 60, may have left on the pipe 200 and/or within the groove 60 itself.

According to a further embodiment, not shown in the figures, the method 600 comprises, after the step of laying 602, a step of heating, by a tubular heating element operatively associated with the supporting module 101 of the apparatus 100, the radially peripheral portion of said at least a second cladding layer 204 in which the groove 60 is formed.

This allows to prepare such a radial peripheral portion for the next melting with the molten filling material 80 and then restore, with the filling material 80, said at least a second cladding layer 204 with the at least one cable 70 embedded therein.

The step of heating comprises a step of emitting hot air at a set heating temperature, by the tubular heating element, the examples and advantages have been introduced above.

It is worth noting that the steps of the method 600, according to the described embodiments, are executed by the components of the apparatus 100 (milling unit 103, laying unit 104, extruding unit 105, cleaning unit 106 - if present, tubular heating element - if present) controlled by a control unit 107, e.g. a microcontroller or a microcontroller, operatively associated with the supporting module 101 of the apparatus 100.

During the execution of the method 600, the control unit 107 also controls the operating parameters such as the set radial depth of the groove 60, the set radial depth and the set width of the upper portion removed from the cleaning unit 106, the set melting temperature of the thread of filling material, the set heating temperature and so on.

Those skilled in the art may make changes and adaptations to the embodiments of the above-described system and respective method for applying cables with one or more optical fibers to a pipe for land or submarine pipelines, or they can replace elements with others which are functionally equivalent in order to satisfy contingent needs without departing from the scope of the following claims. All the features described above as belonging to a possible embodiment may be implemented irrespective of the other described embodiments.

## Claims

1. An apparatus (100) for applying at least one cable (70) of one or more optical fibers (71) to a pipe (200) for land or submarine pipelines, said pipe (200) having a longitudinal direction of development (L), said pipe (200) comprising at least one layer of metallic material (201) and at least one multilayer cladding (202) of said layer of metallic material (201), the at least one multilayer cladding (202) comprising at least one first cladding layer (203) proximal to said at least one layer of metallic material (201) and at least one second cladding layer (204) distal with respect to said at least one layer of metallic material (201), opposite to said at least one first cladding layer (203), the apparatus (100) comprising:
- a plurality of supporting modules (101), each supporting module (101) of said plurality being configured to be operatively associated with a pipe (200), each supporting module (101) being configured to slide with respect to the pipe (200) along the longitudinal direction of development (L) of the pipe (200) ;
- a plurality of milling unit (103), each milling unit (103) being operatively associated with the relative supporting module (101), each milling unit (103) being configured to make a groove (60) in a peripheral radial portion of said at last one second cladding layer (204) along the direction of development (L) of the pipe (200), during the relative sliding between the relative supporting module (101) and the pipe (200), each groove (60) belonging to a plurality of grooves made on said at least a second cladding layer (204) according to a set distribution along different radial directions with respect to the section of the tube (200) along a plane transversal to the longitudinal direction of development (L) of the pipe (200);
- a plurality of laying unit (104) of at least one cable (70) with one or more optical fibers, each laying unit (104) being operatively associated with the relative supporting module (101), each laying unit (104) being configured to lay said at least one cable (70) with one or more optical fibers within the relative groove (60), during the relative sliding between the supporting module (101) and the pipe (200) along the longitudinal direction of development (L) of the pipe (200);
- a plurality of extruding unit (105), each extruding unit (105) being operatively associated with the relative supporting module (101), each extruding unit (105) being configured to release a filling material (80) of the relative groove (60) and to embed said at least one cable (70) with one or more optical fibers (71) within said groove (60), during the relative sliding between the relative supporting module (101) and the pipe (200) along the longitudinal direction of development (L) of the pipe (200), melting the filling material (80) of the groove (60) with the radially peripheral portion of said at least one second cladding layer (204) in which the groove (60) is made.

2. An apparatus (100) according to claim 1, wherein each milling unit (103) is configured to make the groove (60) having a set radial depth and a set width transversally to the longitudinal direction of development (L) of the pipe (200) in the radially peripheral portion of said at least one second cladding layer (204).

3. An apparatus (100) according to claim 2, wherein the set radial depth of the groove (60) is smaller than the thickness of said at least one second cladding layer (204) of said at least one multilayer cladding (202).

4. An apparatus (100) according to claim 3, wherein the set width transversally to the longitudinal direction of development (L) of the pipe (200) of the groove (60) is defined so as to make it possible to house at least one cable (70) with one or more optical fibers (71) therein.

5. An apparatus (100) according to any one of the preceding claims, wherein each laying unit (104) is configured to subject said at least one cable (70) with one or more optical fibers (71) to mechanical tensioning while laying it.

6. An apparatus (100) according to any one of the preceding claims, wherein the filling material (80) is polymeric material, each extruding unit (105) being configured to unwind a thread of filling material (80) from a respective reel, melting it within the extruding unit (105) at a set melting temperature, releasing the molten filling material (80) within the groove (60) by means of a respective extruding head, to embed said at least one cable (70) with one or more optical fibers within the groove (60), during the relative sliding between the relative supporting module (101) and the pipe (200) along the longitudinal direction of development (L) of the pipe (200), melting at least part of said at least one second cladding layer (204) in which the groove (60) is made with the molten filling material (80).

7. An apparatus (100) according to any one of the preceding claims, comprising a plurality of cleaning unit (106), each cleaning unit (106) being operatively associated with the supporting module (101), each cleaning unit (106) being configured to remove, during the relative sliding between the relative supporting module (101) and the pipe (200) along the longitudinal direction of development (L) of the pipe (200), an oxidized portion formed on said at least one second cladding layer (204) of said at least one multilayer cladding (202) as a result of the contact with air after the action of the milling unit (103) or material debris of said at least one second cladding layer (204) of said at least one multilayer cladding (202) that the milling unit (103) may have left on the pipe (200) and/or within the groove (60) itself after having made the groove (60).

8. An apparatus (100) according to any one of the preceding claims, further comprising a plurality of tubular heating element, each tubular heating element being operatively associated with the relative supporting module (101), each tubular heating element is configured to heat the radially peripheral portion of said at least one second cladding layer (204) in which the groove (60) is made in order to prepare such a radially peripheral portion for the subsequent melting with the molten filling material (80) and to restore said at least one second cladding layer (204) with at least one cable (70) with one or more optical fibers (71) embedded within.

9. An apparatus (100) according to any one of the preceding claims, wherein the plurality of supporting module (101) is configured to slide relatively with respect to the pipe (200) along the longitudinal direction of development (L) of the pipe (200) in a first sense of advancement (s1), wherein the relative sliding between the plurality of supporting module (101) and the pipe (200) is obtained by moving the supporting module (101) and keeping the pipe (200) fixed in the first sense of advancement (s1) or by keeping the plurality of supporting module (101) fixed and moving the pipe (200) in a second sense of advancement (s2), opposite to the first sense of advancement (s1) or by moving both the plurality of supporting module (101), in the first sense of advancement (s1), and the pipe (200), in the second sense of advancement (s2), opposite to the first sense of advancement (s1).

10. An apparatus (100) according to any one of the preceding claims, wherein each supporting module (101) of said plurality of supporting module (101) comprises rotational elements (102) adapted to allow the supporting module (101) to slide relatively with respect to the pipe (200) along the longitudinal development direction (L) of the pipe (200), by means of the interaction of the rotational elements (102) with the pipe (200).

11. An apparatus (100) according to any one of the preceding claims, wherein each groove (60) of said plurality of grooves is made in the radially peripheral portion of said at least one second cladding layer (204) of said at least one multilayer cladding (202) starting from the outer surface of the pipe (200).

12. A method (600) for applying at least one cable (70) with one or more optical fibers (71) to a pipe (200) for land or submarine pipelines, said pipe (200) having a longitudinal direction of development (L), said pipe (200) comprising at least one layer of metallic material (201) and at least one multilayer cladding (202) of said layer of metallic material (201), the at least one multilayer cladding (202) comprising at least one first cladding layer (203) proximal to said at least one layer of metallic material (201) and at least one second cladding layer (204) distal with respect to said at least one layer of metallic material (201), opposite to said at least one first cladding layer (203), the method (600) comprising the steps of:
- making (601), by a plurality of milling unit (103), each milling unit (103) being operatively associated with a supporting module (101) of a plurality of supporting modules (101) of an apparatus (100), a plurality of groove (60) along the longitudinal direction of development (L) of the pipe (200) in a peripheral radial portion of said at least one second cladding layer (204), during the relative sliding between the supporting module (101) and the pipe (200), said plurality of grooves being made on said at least a second cladding layer (204) according to a set distribution along different radial directions with respect to the section of the tube (200) along a plane transversal to the longitudinal direction of development (L) of the pipe (200);
- laying (602), by a laying unit (104) of plurality of laying unit (104), each laying unit (104) being operatively associated with the relative supporting module (101) of the plurality of supporting modules (101) of the apparatus (100), at least one cable (70) with one or more optical fibers in the relative groove (60) of said plurality of grooves (60), during the relative sliding between the supporting module (101) along the longitudinal direction of development (L) of the pipe (200) ;
- releasing (603), by an extruding unit (105) of a plurality of extruding unit (105) operatively associated with the supporting module (101) of the apparatus (100), a filling material (80) of the relative groove (60) of said plurality of grooves (60) to embed said at least one cable (70) with one or more optical fibers within the groove (60), during the relative sliding between the relative supporting module (101) and the pipe (200), along the longitudinal direction of development (L) of the pipe (200), melting with the molten filling material (80) of the groove (60) the radially peripheral portion of said at least one second cladding layer (204) in which the groove (60) is made.

13. A method (600) according to claim 12, wherein the step of releasing (603) comprises the step of unwinding, by each extruding unit (105) of said plurality of extruding unit (105), a thread of filling material (80) from a respective reel, melting it inside the extruding unit (105) at a set melting temperature, releasing the molten filling material (80) within the relative groove (60) by means of a respective extruding head of the extruding unit (105) to embed said at least one cable (70) with one or more optical fibers within the groove (60), during the relative sliding between the relative supporting module (101) and the pipe (200) along the longitudinal direction of development (L) of the pipe (200), melting at least part of said at least one second cladding layer (204) at the walls of the groove (60) with the molten filling material (80).

14. A method (600) according to any one of the preceding claims from 12 to 13, wherein the step of laying (602) comprises a step of unwinding, by each laying unit (104), the relative at least one cable (70) with one or more optical fibers from the respective reel by subjecting said at least one cable (70) to mechanical tensioning.

15. A method (600) according to any one of the preceding claims from 12 to 14, comprising a step of removing, by a cleaning unit (106) of a plurality of cleaning unit (106), during the relative sliding between the relative supporting module (101) and the pipe (200) along the longitudinal direction of development (L) of the pipe (200), an oxidized portion formed on said at least one second cladding layer (204) of said at least one multilayer cladding (202) as a result of the contact with air after the action of the milling unit (103) or material debris of said at least one second cladding layer (204) of said at least one multilayer cladding (202) that the milling unit (103), after making the groove (60), may have left on the pipe (200) and/or within the groove (60) itself.

16. A method (600) according to any one of the preceding claims from 12 to 15, comprising, after the step of laying (602), a step of heating, by a tubular heating element of a plurality of tubular heating elements, each tubular heating elements being operatively associated with the relative supporting module (101) of the plurality of supporting modules (101) of the apparatus (100), the radially peripheral portion of said at least one second cladding layer (204) in which the groove (60) is formed.

## Patentansprüche

1. Vorrichtung (100) zum Anbringen wenigstens eines Kabels (70) einer oder mehrerer optischer Fasern (71) an einem Rohr (200) für Land- oder Unterwasser-Rohrleitungen, wobei das Rohr (200) eine longitudinale Entwicklungsrichtung (L) aufweist, wobei das Rohr (200) wenigstens eine Schicht aus einem metallischen Material (201) und wenigstens einen mehrschichtigen Mantel (202) der Schicht eines metallischen Materials (201) umfasst, wobei der wenigstens eine mehrschichtige Mantel (202) wenigstens eine erste Mantelschicht (203) in der Nähe der wenigstens einen Schicht aus einem metallischen Material (201) und wenigstens eine zweite Mantelschicht (204) distal in Bezug auf die wenigstens eine Schicht aus einem metallischen Material (201), der wenigstens einen ersten Mantelschicht (203) entgegengesetzt, umfasst, wobei die Vorrichtung (100) umfasst:
- eine Mehrzahl von Tragmodulen (101), wobei jedes Tragmodul (101) der Mehrzahl dazu eingerichtet ist, einem Rohr (200) betriebsmäßig zugeordnet zu sein, wobei jedes Tragmodul (101) dazu eingerichtet ist, in Bezug auf das Rohr (200) entlang der longitudinalen Entwicklungsrichtung (L) des Rohrs (200) zu gleiten;
- eine Mehrzahl von Fräseinheiten (103), wobei jede Fräseinheit (103) dem zugehörigen Tragmodul (101) betriebsmäßig zugeordnet ist, wobei jede Fräseinheit (103) dazu eingerichtet ist, während des relativen Gleitens zwischen dem zugehörigen Tragmodul (101) und dem Rohr (200) in einem radialen Umfangsabschnitt der wenigstens einen zweiten Mantelschicht (204) entlang der Entwicklungsrichtung (L) des Rohrs (200) eine Nut (60) herzustellen, wobei jede Nut (60) zu einer Mehrzahl von Nuten gehört, welche an der wenigstens einen zweiten Mantelschicht (204) gemäß einer festgelegten Verteilung entlang verschiedener Radialrichtungen in Bezug auf den Querschnitt des Rohrs (200) entlang einer zu der longitudinalen Entwicklungsrichtung (L) des Rohrs (200) transversalen Ebene hergestellt sind;
- eine Mehrzahl von Legeeinheiten (104) wenigstens eines Kabels (70) mit einer oder mehreren optischen Fasern, wobei jede Legeeinheit (104) dem zugehörigen Tragmodul (101) betriebsmäßig zugeordnet ist, wobei jede Legeeinheit (104) dazu eingerichtet ist, während des relativen Gleitens zwischen dem zugehörigen Tragmodul (101) und dem Rohr (200) entlang der longitudinalen Entwicklungsrichtung (L) des Rohrs (200) das wenigstens eine Kabel (70) mit einer oder mehreren optischen Fasern in die zugehörige Nut (60) zu legen;
- eine Mehrzahl von Extrudiereinheiten (105), wobei jede Extrudiereinheit (105) dem zugehörigen Tragmodul (101) betriebsmäßig zugeordnet ist, wobei jede Extrudiereinheit (105) dazu eingerichtet ist, während des relativen Gleitens zwischen dem zugehörigen Tragmodul (101) und dem Rohr (200) entlang der longitudinalen Entwicklungsrichtung (L) des Rohrs (200), ein Füllmaterial (80) der zugehörigen Nut (60) freizugeben und das wenigstens eine Kabel (70) mit einer oder mehreren optischen Fasern (71) innerhalb der Nut (60) einzubetten, wobei das Füllmaterial (80) der Nut (60) mit dem radialen Umfangsabschnitt der wenigstens einen zweiten Mantelschicht (204) verschmilzt, in welcher die Nut (60) hergestellt ist.

2. Vorrichtung (100) nach Anspruch 1, wobei jede Fräseinheit (103) dazu eingerichtet ist, die Nut (60) herzustellen, welche eine festgelegte radiale Tiefe und eine festgelegte Breite transversal zu der longitudinalen Entwicklungsrichtung (L) des Rohrs (200) in dem radialen Umfangsabschnitt der wenigstens einen zweiten Mantelschicht (204) aufweist.

3. Vorrichtung (100) nach Anspruch 2, wobei die festgelegte radiale Tiefe der Nut (60) geringer als die Dicke der wenigstens einen zweiten Mantelschicht (204) des wenigstens einen mehrschichtigen Mantels (202) ist.

4. Vorrichtung (100) nach Anspruch 3, wobei die festgelegte Breite transversal zu der longitudinalen Entwicklungsrichtung (L) des Rohrs (200) der Nut (60) definiert ist, um es zu ermöglichen, wenigstens ein Kabel (70) mit einer oder mehreren optischen Fasern (71) darin aufzunehmen.

5. Vorrichtung (100) nach einem der vorhergehenden Ansprüche, wobei jede Legeeinheit (104) dazu eingerichtet ist, das wenigstens eine Kabel (70) mit einer oder mehreren optischen Fasern (71) einem mechanischen Spannen auszusetzen, während es gelegt wird.

6. Vorrichtung (100) nach einem der vorhergehenden Ansprüche, wobei das Füllmaterial (80) ein Polymermaterial ist, wobei jede Extrudiereinheit (105) dazu eingerichtet ist, einen Strang eines Füllmaterials (80) von einer entsprechenden Rolle abzuwickeln, wobei es innerhalb der Extrudiereinheit (105) bei einer festgelegten Schmelztemperatur schmilzt, wobei das geschmolzene Füllmaterial (80) innerhalb der Nut (60) mittels eines entsprechenden Extrudierkopfes freigegeben wird, um das wenigstens eine Kabel (70) mit einer oder mehreren optischen Fasern innerhalb der Nut (60) einzubetten, während des relativen Gleitens zwischen dem zugehörigen Tragmodul (101) und dem Rohr (200) entlang der longitudinalen Entwicklungsrichtung (L) des Rohrs (200), wobei wenigstens ein Teil der wenigstens einen zweiten Mantelschicht (204), in welcher die Nut (60) hergestellt ist, mit dem geschmolzenen Füllmaterial (80) verschmilzt.

7. Vorrichtung (100) nach einem der vorhergehenden Ansprüche, umfassend eine Mehrzahl von Reinigungseinheiten (106), wobei jede Reinigungseinheit (106) dem Tragmodul (101) betriebsmäßig zugeordnet ist, wobei jede Reinigungseinheit (106) dazu eingerichtet ist, während des relativen Gleitens zwischen dem zugehörigen Tragmodul (101) und dem Rohr (200) entlang der longitudinalen Entwicklungsrichtung (L) des Rohrs (200) einen oxidierten Abschnitt, welcher an der wenigstens einen zweiten Mantelschicht (204) des wenigstens einen mehrschichtigen Mantels (202) infolge des Kontaktes mit Luft nach der Einwirkung der Fräseinheit (103) gebildet ist, oder Materialrückstände der wenigstens einen zweiten Mantelschicht (204) des wenigstens einen mehrschichtigen Mantels (202) zu entfernen, welche die Fräseinheit (103) möglicherweise an dem Rohr (200) und/oder innerhalb der Nut (60) selbst zurückgelassen hat, nachdem die Nut (60) hergestellt worden ist.

8. Vorrichtung (100) nach einem der vorhergehenden Ansprüche, ferner umfassend eine Mehrzahl schlauchförmiger Heizelemente, wobei jedes schlauchförmige Heizelement dem zugehörigen Tragmodul (101) betriebsmäßig zugeordnet ist, wobei jedes schlauchförmige Heizelement dazu eingerichtet ist, den radialen Umfangsabschnitt der wenigstens einen zweiten Mantelschicht (204) zu erwärmen, in welchem die Nut (60) hergestellt ist, um einen solchen radialen Umfangsabschnitt für das anschließende Verschmelzen mit dem geschmolzenen Füllmaterial (80) vorzubereiten und die wenigstens eine zweite Mantelschicht (204) mit wenigstens einem Kabel (70) mit einer oder mehreren optischen Fasern (71) darin eingebettet widerherzustellen.

9. Vorrichtung (100) nach einem der vorhergehenden Ansprüche, wobei die Mehrzahl von Tragmodulen (101) dazu eingerichtet ist, sich in Bezug auf das Rohr (200) entlang der longitudinalen Entwicklungsrichtung (L) des Rohrs (200) in einem ersten Sinn eines Voranschreitens (s1) zu gleiten, wobei das relative Gleiten zwischen der Mehrzahl von Tragmodulen (101) und dem Rohr (200) durch ein Bewegen des Tragmoduls (101) und ein Halten des Rohrs (200) in dem ersten Sinn eines Voranschreitens (s1) fixiert oder durch ein Halten der Mehrzahl von Tragmodulen (101) fixiert und ein Bewegen des Rohrs (200) in einem zweiten Sinn eines Voranschreitens (s2), dem ersten Sinn eines Voranschreitens (s1) entgegengesetzt, oder durch ein Bewegen von sowohl der Mehrzahl der Tragmodule (101) in dem ersten Sinn eines Voranschreitens (s1) als auch dem Rohr (200) in dem zweiten Sinn eines Voranschreitens (s2), dem ersten Sinn eines Voranschreitens (s1) entgegengesetzt, erhalten wird.

10. Vorrichtung (100) nach einem der vorhergehenden Ansprüche, wobei jedes Tragmodul (101) der Mehrzahl von Tragmodulen (101) Rotationselemente (102) umfasst, welche dazu eingerichtet sind, dem Tragmodul (101) zu erlauben, in Bezug auf das Rohr (200) entlang der longitudinalen Entwicklungsrichtung (L) des Rohrs (200) mittels des Zusammenwirkens der Rotationselemente (102) mit dem Rohr (200) relativ zu gleiten.

11. Vorrichtung (100) nach einem der vorhergehenden Ansprüche, wobei jede Nut (60) der Mehrzahl von Nuten in dem radialen Umfangsabschnitt der wenigstens einen zweiten Mantelschicht (204) des wenigstens einen mehrschichtigen Mantels (202) beginnend von der äußeren Fläche des Rohrs (200) hergestellt ist.

12. Verfahren (600) zum Anbringen wenigstens eines Kabels (70) mit einer oder mehreren optischen Fasern (71) an einem Rohr (200) für Land- oder Unterwasser-Rohrleitungen, wobei das Rohr (200) eine longitudinale Entwicklungsrichtung (L) aufweist, wobei das Rohr (200) wenigstens eine Schicht aus einem metallischen Material (201) und wenigstens einen mehrschichtigen Mantel (202) der Schicht eines metallischen Materials (201) umfasst, wobei der wenigstens eine mehrschichtige Mantel (202) wenigstens eine erste Mantelschicht (203) in der Nähe der wenigstens einen Schicht aus einem metallischen Material (201) und wenigstens eine zweite Mantelschicht (204) distal in Bezug auf die wenigstens eine Schicht aus einem metallischen Material (201), der wenigstens einen ersten Mantelschicht (203) entgegengesetzt, umfasst, wobei das Verfahren (600) die folgenden Schritte umfasst:
- Herstellen (601), durch eine Mehrzahl von Fräseinheiten (103), wobei jede Fräseinheit (103) einem Tragmodul (101) einer Mehrzahl von Tragmodulen (101) einer Vorrichtung (100) betriebsmäßig zugeordnet ist, einer Mehrzahl von Nuten (60) entlang der longitudinalen Entwicklungsrichtung (L) des Rohrs (200) in einem radialen Umfangsabschnitt der wenigstens einen zweiten Mantelschicht (204), während des relativen Gleitens zwischen dem Tragmodul (101) und dem Rohr (200), wobei die Mehrzahl von Nuten an der wenigstens einen zweiten Mantelschicht (204) gemäß einer festgelegten Verteilung entlang verschiedener Radialrichtungen in Bezug auf den Querschnitt des Rohrs (200) entlang einer zu der longitudinalen Entwicklungsrichtung (L) des Rohrs (200) transversalen Ebene hergestellt werden;
- Legen (602), durch eine Legeeinheit (104) einer Mehrzahl von Legeeinheiten (104), wobei jede Legeeinheit (104) dem zugehörigen Tragmodul (101) der Mehrzahl von Tragmodulen (101) der Vorrichtung (100) betriebsmäßig zugeordnet ist, wenigstens eines Kabels (70) mit einer oder mehreren optischen Fasern in die zugehörige Nut (60) der Mehrzahl von Nuten (60), während des relativen Gleitens zwischen dem Tragmodul (101) entlang der longitudinalen Entwicklungsrichtung (L) des Rohrs (200);
- Freigeben (603), durch eine Extrudiereinheit (105) einer Mehrzahl von Extrudiereinheiten (105), welche dem zugehörigen Tragmodul (101) der Vorrichtung (100) betriebsmäßig zugeordnet ist, eines Füllmaterials (80) der zugehörigen Nut (60) der Mehrzahl von Nuten (60), um das wenigstens eine Kabel (70) mit einer oder mehreren optischen Fasern innerhalb der Nut (60) einzubetten, während des relativen Gleitens zwischen dem zugehörigen Tragmodul (101) und dem Rohr (200) entlang der longitudinalen Entwicklungsrichtung (L) des Rohrs (200), wobei das geschmolzene Füllmaterial (80) der Nut (60) mit dem radialen Umfangsabschnitt der wenigstens einen zweiten Mantelschicht (204) verschmilzt, in welcher die Nut (60) hergestellt ist.

13. Verfahren (600) nach Anspruch 12, wobei der Schritt des Freigebens (603) den Schritt eines Abwickelns, durch jede Extrudiereinheit (105) einer Mehrzahl von Extrudiereinheiten (105), eines Strangs eines Füllmaterials (80) von einer entsprechenden Rolle umfasst, wobei es innerhalb der Extrudiereinheit (105) bei einer festgelegten Schmelztemperatur schmilzt, wobei das geschmolzene Füllmaterial (80) innerhalb der zugehörigen Nut (60) mittels eines entsprechenden Extrudierkopfes der Extrudiereinheit (105) freigegeben wird, um das wenigstens eine Kabel (70) mit einer oder mehreren optischen Fasern innerhalb der Nut (60) einzubetten, während des relativen Gleitens zwischen dem zugehörigen Tragmodul (101) und dem Rohr (200) entlang der longitudinalen Entwicklungsrichtung (L) des Rohrs (200), wobei wenigstens ein Teil der wenigstens einen zweiten Mantelschicht (204), an den Wänden der Nut (60) mit dem geschmolzenen Füllmaterial (80) verschmilzt.

14. Verfahren (600) nach einem der vorhergehenden Ansprüche 12 bis 13, wobei der Schritt des Legens (602) einen Schritt eines Abwickelns, durch jede Legeeinheit (104), des zugehörigen wenigstens einen Kabels (70) mit einer oder mehreren optischen Fasern von der entsprechenden Rolle umfasst, indem das wenigstens eine Kabel (70) einem mechanischen Spannen ausgesetzt wird.

15. Verfahren (600) nach einem der vorhergehenden Ansprüche 12 bis 14, umfassend einen Schritt eines Entfernens, durch eine Reinigungseinheit (106) einer Mehrzahl von Reinigungseinheiten (106), während des relativen Gleitens zwischen dem zugehörigen Tragmodul (101) und dem Rohr (200) entlang der longitudinalen Entwicklungsrichtung (L) des Rohrs (200), eines oxidierten Abschnitts, welcher an der wenigstens einen zweiten Mantelschicht (204) des wenigstens einen mehrschichtigen Mantels (202) infolge des Kontaktes mit Luft nach der Einwirkung der Fräseinheit (103) gebildet wird, oder von Materialrückständen der wenigstens einen zweiten Mantelschicht (204) des wenigstens einen mehrschichtigen Mantels (202), welche die Fräseinheit (103) möglicherweise an dem Rohr (200) und/oder innerhalb der Nut (60) selbst zurückgelassen hat, nachdem die Nut (60) hergestellt worden ist.

16. Verfahren (600) nach einem der vorhergehenden Ansprüche 12 bis 15, umfassend nach dem Schritt des Legens (602), einen Schritt eines Erwärmens, durch ein schlauchförmiges Heizelement einer Mehrzahl schlauchförmiger Heizelemente, wobei jedes schlauchförmige Heizelement dem entsprechenden Tragmodul (101) der Mehrzahl von Tragmodulen (101) der Vorrichtung (100) betriebsmäßig zugeordnet ist, des radialen Umfangsabschnitts der wenigstens einen zweiten Mantelschicht (204), in welchem die Nut (60) hergestellt ist.

## Revendications

1. Appareil (100) permettant d'appliquer au moins un câble (70) d'une ou de plusieurs fibres optiques (71) à un tuyau (200) pour pipelines terrestres ou sous-marins, ledit tuyau (200) ayant une direction de développement (L) longitudinale, ledit tuyau (200) comprenant au moins une couche de matériau métallique (201) et au moins une gaine multicouche (202) de ladite couche de matériau métallique (201), la gaine multicouche (202), au moins au nombre de une, comprenant au moins une première couche de gaine (203) proximale par rapport à ladite couche de matériau métallique (201), au moins au nombre de une, et au moins une seconde couche de gaine (204) distale par rapport à ladite couche de matériau métallique (201), au moins au nombre de une, opposée à ladite première couche de gaine (203), au moins au nombre de une, l'appareil (100) comprenant :
- une pluralité de modules de support (101), chaque module de support (101) de ladite pluralité étant configuré pour être associé de manière fonctionnelle à un tuyau (200), chaque module de support (101) étant configuré pour coulisser par rapport au tuyau (200) suivant la direction de développement (L) longitudinale du tuyau (200) ;
- une pluralité d'unités de fraisage (103), chaque unité de fraisage (103) étant associée de manière fonctionnelle au module de support (101) relatif, chaque unité de fraisage (103) étant configurée pour réaliser une rainure (60) dans une partie radiale périphérique de ladite seconde couche de gaine (204), au moins au nombre de une, suivant la direction de développement (L) du tuyau (200), pendant le coulissement relatif entre le module de support (101) relatif et le tuyau (200), chaque rainure (60) appartenant à une pluralité de rainures réalisées sur ladite seconde couche de gaine (204), au moins au nombre de une, selon une distribution définie le long de directions radiales différentes par rapport à la section du tube (200) suivant un plan transversal à la direction de développement (L) longitudinale du tuyau (200) ;
- une pluralité d'unités de pose (104) d'au moins un câble (70) comportant une ou plusieurs fibres optiques, chaque unité de pose (104) étant associée de manière fonctionnelle au module de support (101) relatif, chaque unité de pose (104) étant configurée pour poser ledit câble (70), au moins au nombre de un, comportant une ou plusieurs fibres optiques à l'intérieur de la rainure (60) relative pendant le coulissement relatif entre le module de support (101) et le tuyau (200) suivant la direction de développement (L) longitudinale du tuyau (200) ;
- une pluralité d'unités d'extrusion (105), chaque unité d'extrusion (105) étant associée de manière fonctionnelle au module de support (101) relatif, chaque unité d'extrusion (105) étant configurée pour libérer un matériau de remplissage (80) de la rainure (60) relative et pour incorporer ledit câble (70), au moins au nombre de un, comportant une ou plusieurs fibres optiques (71) à l'intérieur de ladite rainure (60) pendant le coulissement relatif entre le module de support (101) relatif et le tuyau (200), suivant la direction de développement (L) longitudinale du tuyau (200), en faisant fondre le matériau de remplissage (80) de la rainure (60) avec la partie radialement périphérique de ladite seconde couche de gaine (204), au moins au nombre de une, dans laquelle la rainure (60) est réalisée.

2. Appareil (100) selon la revendication 1, dans lequel chaque unité de fraisage (103) est configurée pour réaliser la rainure (60) ayant une profondeur radiale définie et une largeur définie transversalement à la direction de développement (L) longitudinale du tuyau (200) dans la partie radialement périphérique de ladite seconde couche de gaine (204), au moins au nombre de une.

3. Appareil (100) selon la revendication 2, dans lequel la profondeur radiale définie de la rainure (60) est inférieure à l'épaisseur de ladite seconde couche de gaine (204), au moins au nombre de une, de ladite gaine multicouche (202), au moins au nombre de une.

4. Appareil (100) selon la revendication 3, dans lequel la largeur définie transversalement à la direction de développement (L) longitudinale du tuyau (200) de la rainure (60) est définie de façon à permettre d'y loger au moins un câble (70) comportant une ou plusieurs fibres optiques (71).

5. Appareil (100) selon l'une quelconque des revendications précédentes, dans lequel chaque unité de pose (104) est configurée pour soumettre ledit câble (70), au moins au nombre de un, comportant une ou plusieurs fibres optiques (71) à une mise en tension mécanique pendant la pose de celui-ci.

6. Appareil (100) selon l'une quelconque des revendications précédentes, dans lequel le matériau de remplissage (80) est un matériau polymère, chaque unité d'extrusion (105) étant configurée pour dérouler un fil de matériau de remplissage (80) depuis une bobine respective, le faire fondre à l'intérieur de l'unité d'extrusion (105) à une température de fusion définie, libérer le matériau de remplissage (80) fondu à l'intérieur de la rainure (60) au moyen d'une tête d'extrusion respective, afin d'incorporer ledit câble (70), au moins au nombre de un, comportant une ou plusieurs fibres optiques à l'intérieur de la rainure (60) pendant le coulissement relatif entre le module de support (101) relatif et le tuyau (200) suivant la direction de développement (L) longitudinale du tuyau (200), en faisant fondre au moins une partie de ladite seconde couche de gaine (204), au moins au nombre de une, dans laquelle la rainure (60) est réalisée avec le matériau de remplissage (80) fondu.

7. Appareil (100) selon l'une quelconque des revendications précédentes, comprenant une pluralité d'unités de nettoyage (106), chaque unité de nettoyage (106) étant associée de manière fonctionnelle au module de support (101), chaque unité de nettoyage (106) étant configurée pour éliminer, pendant le coulissement relatif entre le module de support (101) relatif et le tuyau (200) suivant la direction de développement (L) longitudinale du tuyau (200), une partie oxydée formée sur ladite seconde couche de gaine (204), au moins au nombre de une, de ladite gaine multicouche (202), au moins au nombre de une, du fait du contact avec l'air après l'action de l'unité de fraisage (103) ou les débris de matériau de ladite seconde couche de gaine (204), au moins au nombre de une, de ladite gaine multicouche (202), au moins au nombre de une, que l'unité de fraisage (103) peut avoir laissés sur le tuyau (200) et/ou à l'intérieur de la rainure (60) elle-même après la réalisation de la rainure (60).

8. Appareil (100) selon l'une quelconque des revendications précédentes, comprenant en outre une pluralité d'éléments de chauffage tubulaires, chaque élément de chauffage tubulaire étant associé de manière fonctionnelle au module de support (101) relatif, chaque élément de chauffage tubulaire étant configuré pour chauffer la partie radialement périphérique de ladite seconde couche de gaine (204), au moins au nombre de une, dans laquelle la rainure (60) est réalisée afin de préparer une telle partie radialement périphérique à la fusion ultérieure avec le matériau de remplissage (80) fondu et de restaurer ladite seconde couche de gaine (204), au moins au nombre de une, dans laquelle est incorporé le câble (70), au moins au nombre de un, comportant une ou plusieurs fibres optiques (71).

9. Appareil (100) selon l'une quelconque des revendications précédentes, dans lequel la pluralité de modules de support (101) est configurée pour coulisser relativement par rapport au tuyau (200) suivant la direction de développement (L) longitudinale du tuyau (200) dans un premier sens d'avancée (s1), dans lequel le coulissement relatif entre la pluralité de modules de support (101) et le tuyau (200) est obtenu par déplacement du module de support (101) et maintien du tuyau (200) fixe dans le premier sens d'avancée (s1) ou par maintien de la pluralité de modules de support (101) fixes et déplacement du tuyau (200) dans un second sens d'avancée (s2), opposé au premier sens d'avancée (s1), ou par déplacement simultané de la pluralité de modules de support (101), dans le premier sens d'avancée (s1), et du tuyau (200), dans le second sens d'avancée (s2) opposé au premier sens d'avancée (s1).

10. Appareil (100) selon l'une quelconque des revendications précédentes, dans lequel chaque module de support (101) de ladite pluralité de modules de support (101) comprend des éléments rotatifs (102) adaptés pour permettre au module de support (101) de coulisser relativement par rapport au tuyau (200) suivant la direction de développement (L) longitudinale du tuyau (200), au moyen de l'interaction des éléments rotatifs (102) avec le tuyau (200).

11. Appareil (100) selon l'une quelconque des revendications précédentes, dans lequel chaque rainure (60) de ladite pluralité de rainures est réalisée dans la partie radialement périphérique de ladite seconde couche de gaine (204), au moins au nombre de une, de ladite gaine multicouche (202), au moins au nombre de une, en partant de la surface externe du tuyau (200).

12. Procédé (600) permettant d'appliquer au moins un câble (70) comportant une ou plusieurs fibres optiques (71) à un tuyau (200) pour pipelines terrestres ou sous-marins, ledit tuyau (200) ayant une direction de développement (L) longitudinale, ledit tuyau (200) comprenant au moins une couche de matériau métallique (201) et au moins une gaine multicouche (202) de ladite couche de matériau métallique (201), la gaine multicouche (202), au moins au nombre de une, comprenant au moins une première couche de gaine (203) proximale par rapport à ladite couche de matériau métallique (201), au moins au nombre de une, et au moins une seconde couche de gaine (204) distale par rapport à ladite couche de matériau métallique (201), au moins au nombre de une, opposée à ladite première couche de gaine (203), au moins au nombre de une, le procédé (600) comprenant les étapes de :
- réalisation (601), par une pluralité d'unités de fraisage (103), chaque unité de fraisage (103) étant associée de manière fonctionnelle à un module de support (101) d'une pluralité de modules de support (101) d'un appareil (100), d'une pluralité de rainures (60) suivant la direction de développement (L) longitudinale du tuyau (200) dans une partie radiale périphérique de ladite seconde couche de gaine (204), au moins au nombre de une, pendant le coulissement relatif entre le module de support (101) et le tuyau (200), ladite pluralité de rainures étant réalisées sur ladite seconde couche de gaine (204), au moins au nombre de une, selon une distribution définie suivant différentes directions radiales par rapport à la section du tube (200) suivant un plan transversal à la direction de développement (L) longitudinale du tuyau (200) ;
- pose (602), par une unité de pose (104) d'une pluralité d'unités de pose (104), chaque unité de pose (104) étant associée de manière fonctionnelle au module de support (101) relatif de la pluralité de modules de support (101) de l'appareil (100), d'au moins un câble (70) comportant une ou plusieurs fibres optiques dans la rainure (60) relative de ladite pluralité de rainures (60) pendant le coulissement relatif entre le module de support (101) suivant la direction de développement (L) longitudinale du tuyau (200) ;
- libération (603), par une unité d'extrusion (105) d'une pluralité d'unités d'extrusion (105) associées de manière fonctionnelle au module de support (101) de l'appareil (100), d'un matériau de remplissage (80) de la rainure (60) relative de ladite pluralité de rainures (60) pour incorporer ledit câble (70), au moins au nombre de un, comportant une ou plusieurs fibres optiques à l'intérieur de la rainure (60) pendant le coulissement relatif entre le module de support (101) relatif et le tuyau (200), suivant la direction de développement (L) longitudinale du tuyau (200), en faisant fondre avec le matériau de remplissage (80) fondu de la rainure (60) la partie radialement périphérique de ladite seconde couche de gaine (204), au moins au nombre de une, dans laquelle la rainure (60) est réalisée.

13. Procédé (600) selon la revendication 12, dans lequel l'étape de libération (603) comprend l'étape de déroulage, par chaque unité d'extrusion (105) de ladite pluralité d'unités d'extrusion (105), d'un fil de matériau de remplissage (80) depuis une bobine respective, l'étape consistant à le faire fondre à l'intérieur de l'unité d'extrusion (105) à une température de fusion définie, l'étape de libération du matériau de remplissage (80) fondu à l'intérieur de la rainure (60) relative au moyen d'une tête d'extrusion respective de l'unité d'extrusion (105) pour incorporer ledit câble (70), au moins au nombre de un, comportant une ou plusieurs fibres optiques à l'intérieur de la rainure (60) pendant le coulissement relatif entre le module de support (101) relatif et le tuyau (200) suivant la direction de développement (L) longitudinale du tuyau (200), en faisant fondre au moins une partie de ladite seconde couche de gaine (204), au moins au nombre de une, au niveau des parois de la rainure (60) avec le matériau de remplissage (80) fondu.

14. Procédé (600) selon l'une quelconque des revendications 12 à 13 précédentes, dans lequel l'étape de pose (602) comprend une étape de déroulage, par chaque unité de pose (104), du câble (70), au moins au nombre de un, relatif comportant une ou plusieurs fibres optiques depuis la bobine respective par soumission dudit câble (70), au moins au nombre de un, à une mise en tension mécanique.

15. Procédé (600) selon l'une quelconque des revendications 12 à 14 précédentes, comprenant une étape d'élimination, par une unité de nettoyage (106) d'une pluralité d'unités de nettoyage (106), pendant le coulissement relatif entre le module de support (101) relatif et le tuyau (200) suivant la direction de développement (L) longitudinale du tuyau (200), d'une partie oxydée formée sur ladite seconde couche de gaine (204), au moins au nombre de une, de ladite gaine multicouche (202), au moins au nombre de une, du fait du contact avec l'air après l'action de l'unité de fraisage (103), ou de débris de matériau de ladite seconde couche de gaine (204), au moins au nombre de une, de ladite gaine multicouche (202), au moins au nombre de une, que l'unité de fraisage (103), après la réalisation de la rainure (60), peut avoir laissés sur le tuyau (200) et/ou à l'intérieur de la rainure (60) elle-même.

16. Procédé (600) selon l'une quelconque des revendications 12 à 15 précédentes, comprenant, après l'étape de pose (602), une étape de chauffage, par un élément de chauffage tubulaire d'une pluralité d'éléments de chauffage tubulaires, chaque élément de chauffage tubulaire étant associé de manière fonctionnelle au module de support (101) relatif de la pluralité de modules de support (101) de l'appareil (100), de la partie radialement périphérique de ladite seconde couche de gaine (204), au moins au nombre de une, dans laquelle la rainure (60) est réalisée.
